Europäisches Patentamt

European Patent Office

Office européen des brevets

(11) Veröffentlichungsnummer: **0 280 048**
**A1**

(12) **EUROPÄISCHE PATENTANMELDUNG**

(21) Anmeldenummer: **88101065.6**

(22) Anmeldetag: **26.01.88**

(51) Int. Cl.⁴: **A01B 49/02** , A01B 35/18

(30) Priorität: **18.02.87 DE 8702496 U**

(43) Veröffentlichungstag der Anmeldung:
**31.08.88 Patentblatt 88/35**

(84) Benannte Vertragsstaaten:
**AT CH DE FR GB IT LI**

(71) Anmelder: **Rabewerk Heinrich Clausing**

**D-4515 Bad Essen 1(DE)**

(72) Erfinder: **Bohnenkamp, Wilfried, Dipl.-Ing.**
**Klusring 25**
**D-4515 Bad Essen 1(DE)**

(74) Vertreter: **Missling, Arne, Dipl.-Ing.**
**Patentanwalt Bismarckstrasse 43**
**D-6300 Giessen(DE)**

(54) **Bodeneinebnungsgerät.**

(57) Das erfindungsgemäße Bodeneinebnungsgerät hat einen Grubber (1) und einen Rahmen (7), der auf höhenverstellbaren Stützrädern (26, 27) läuft. Wenigstens zwei Reihen von Zinken (6) sind, namentlich paarweise, drehbar gelagerte Zustreichscheiben (12) nachgeordnet, die von einem Anbaurahmen (11) gehaltert werden, der an einem Dreipunktgestänge oder am hinteren bzw. unteren Ende des Grubber-Rahmens (7) angelenkt ist, insbesondere gegenüber dem Grubber (1) winkelbeweglich. Bevorzugt sind die zur Fahrtrichtung etwas geneigten Zustreichscheiben (12) an einem höhenbeweglichen Querbalken (14) des Anbaurahmens (11) seiten- und höhenverstellbar angebracht. Ein Spannschloß (13) kann zur Abstützung des Anbaurahmens (11) gegenüber dem höher gelegenen Teil (3) des Grubbers (1) dienen. An diesen kann ein Stützrahmen (18') für ein Nachlaufgerät (z. B. eine Krümelwalze 18) angelenkt sein. Zwischen Federn (22, 23) mit einstellbarer Spannung kann ein Lager (24) für eine längenveränderliche Gelenkspindel (19, 20) vorhanden sein, die vorzugsweise an einem Dreipunkt-Ständer (31) des Grubbers (1) angelenkt ist.

Fig. 1

## Bodeneinebnungsgerät

Die Erfindung betrifft ein Bodeneinebnungsgerät gemäß dem Oberbegriff von Anspruch 1.

Derartige Vorrichtungen sind in dem DE-GM 77 36 543 beschrieben. An einem Grubber mit beispielsweise drei oder vier Zinkenreihen ist hierbei eine abgefederte Schleppe vorgesehen, der noch eine Krümelwalzen-Anordnung folgen kann. Damit solche Vorrichtungen vom Zuggerät oder Schlepper ausgehoben werden können, soll der sogenannte Vorgrubber möglichst kurz sein. Um ein verstopfungsfreies Arbeiten zu erlauben, ordnet man die Zinken zumindest zweireihig mit großen seitlichen Abständen zueinander an. Das bedingt jedoch breite Schare mit entsprechendem Freiwinkel in Fahrtrichtung, der noch genügend Einzug für die Schare gewährleistet. Zwischen dem Zinken der zweiten Reihe entstehen dadurch große Dämme, die sich mit herkömmlichen Schleppen nicht einebnen lassen.

Es gibt auch bereits einen sogenannten Scheibengrubber, der einen Rahmen mit zwei Zinkenreihen aufweist und an der dritten Reihe höhenverstellbare Paare von Hohlscheiben hat, hinter denen sich eine Rohrstabwalze befindet. Diese Anordnung kann sich jedoch vorhandenen Bodenwellen nicht ohne weiteres anpassen. Wenn beim Grubbern Haufen aus einem Stroh-Erd-Gemisch entstehen, laufen die Hohlscheiben darüber und heben die Vorrichtung samt den Scharen aus dem Boden. Beim Wiedereinsetzen kann Stroh vor die Schare gelangen, wodurch der Wiedereinzug des Grubbers behindert wird. Die Hohlscheiben sind in einer sogenannten Zwillingsstellung zwischen zwei Zinken zueinander versetzt; die Bodenrillen der äußeren Zinken der hinteren Reihe werden also immer nur von einer Hohlscheibe zugeworfen. Quer zur Fahrtrichtung bildet sich daher eine wellenförmige Bodenstruktur aus.

Zwar kann ein zapfwellengetriebenes Folgegerät, etwa eine Kreiselegge, hier Abhilfe schaffen. Namentlich bei leichten, sandigen Böden will man solche Geräte aber nicht immer einsetzen.

Es ist ein wichtiges Ziel der Erfindung, diese und weitere Nachteile des Standes der Technik zu überwinden und ein verbessertes, einfach aufgebautes Gerät zu schaffen, mit dem insbesondere von Bearbeitungsmaschinen zuvor erzeugte Unebenheiten auch bei auftretenden Bodenhindernissen breitflächig eingeebnet werden können, ohne daß sich das ganze Gerät jedesmal aus dem Boden hebt. Nach Bedarf sollen sich auch Zusatzgeräte, wie Kreiselegge, Fräse, Spatenkrümler, Scheibeneggen und dergleichen außerdem anbauen lassen.

Hauptmerkmale der Erfindung sind im kennzeichnenden Teil von Anspruch 1 angegeben. Ausgestaltungen sind Gegenstand der Unteransprüche 2 bis 19.

Erfindungsgemäß ist durch den gelenkigen Anschluß eines Anbaurahmens, der die Zustreichscheiben haltert, stets eine gute Anpassung des Gerätes an die jeweilige Bodengestaltung möglich. Auch quer zur Fahrtrichtung verlaufende Bodenwellen werden zuverlässig eingeebnet. Die Vorrichtung baut insgesamt sehr kurz und ist deshalb überaus wendig. Zu bequemer Handhabung trägt es bei, wenn nach Anspruch 2 die Zustreichscheiben an einem hinteren Querbalken des Anbaurahmens seiten-und höhenverstellbar angebracht sind.

Wichtig ist die Ausgestaltung laut Anspruch 3, wonach am hinteren bzw. unteren Ende des Grubber-Rahmens die Anlenkpunkte des Anbaurahmens liegen, der gemäß Anspruch 4 gegenüber einem höher gelegenen Teil des Grubbers winkelbeweglich abgestützt sein kann. Konstruktiv ist hierbei zur Abstützung nach Anspruch 5 vorteilhaft ein Spannschloß vorgesehen, das einerseits an oder nahe dem hinteren Ende des Anbaurahmens und andererseits an dem höher gelegenen Teil des Grubbers angelenkt ist, wobei gemäß Anspruch 6 zumindest an einem Anlenkpunkt eine Langloch-Befestigung vorhanden sein kann. Dadurch werden Ausweichbewegungen des Gerätes gut abgefangen. Während die Grobeinstellung der Höhe der Zustreichscheiben über eine an sich bekannte Täschenverstellung erfolgt, ist eine annähernd parallele Feineinstellung mit dem Spannschloß möglich.

Eine andere sehr vorteilhafte Ausgestaltung der Erfindung besteht nach Anspruch 7 darin, daß an oder nahe dem hinteren Ende des Anbaurahmens ein Nachlaufgerät mit einem Stützrahmen angelenkt ist, der seinerseits mit dem Grubber winkelbeweglich verbunden ist. Dadurch wird das Gerät außerordentlich vielseitig verwendbar. Geeignet sind insbesondere Dreipunktgeräte, wie Kreiselegge, Fräse, Spatenkrümler, Scheibeneggen u. dgl. Hierbei ist es sehr vorteilhaft, wenn der Stützrahmen gemäß Anspruch 8 ein Lager für eine Gelenkspindel trägt, das laut Anspruch 9 zwischen Federn mit verstellbarer Spannung beweglich geführt ist. Mittels einer Stellscheibe nach Anspruch 10 läßt sich die Vorspannung bequem verändern. Bevorzugt ist die in Fahrtrichtung vordere Feder nach Anspruch 11 stärker als die hinter dem Lager befindliche zweite Feder, so daß der Stützrahmen des Nachlaufgerätes Bodenunebenheiten und Hindernissen elastisch ausweichen kann. Die Länge der Gelenkspindel ist gemäß Anspruch 12 vorzugsweise mittels einer Kurbel veränderlich, wodurch die Winkellage des Nachlaufgerätes nach Bedarf eingestellt werden kann.

Eine andere Weiterbildung der Erfindung sieht gemäß Anspruch 13 vor, daß der Anbaurahmen über beiderseitige Zapfengelenke mit dem Grubber-Rahmen verbunden und an diesem über einen Dreipunkt-Ständer abgestützt ist. Infolgedessen ist der Anbaurahmen über ein Gelenkviereck an den Grubber-Rahmen angeschlossen, so daß besonders große Beweglichkeit bei exakter Führung gegeben ist. Hierbei ist es vorteilhaft, wenn der Grubber-Rahmen laut Anspruch 14 Unterlenker aufweist, die nach oben offene Aufnahmen für die beispielsweise mittels Steckern sicherbaren Zapfengelenke haben. Während eine Begrenzung nicht notwendig ist, kann nach Anspruch 15 die Absenkung des Anbaurahmen-Vorderteils durch Fangketten zwischen seiner Anlenkung und dem höher gelegenen Teil des Grubbers begrenzt werden.

Konstruktiv ist es ferner günstig, wenn laut Anspruch 16 der Dreipunkt-Ständer durch das Spannschloß mit dem höher gelegenen Teil des Grubbers verbunden ist. Auch kann laut Anspruch 17 der Anbaurahmen mit dem Dreipunkt-Ständer über einen einfachen Lenker verbunden sein.Gemäß Anspruch 18 kann die Gelenkspindel des Nachlaufgerätes an dem Dreipunkt-Ständer angelenkt sein, wobei sich die Anlenkstelle nach Bedarf höher oder tiefer legen läßt. Nach Anspruch 19 kann jeder Anlenkpunkt zugleich eine weitere Funktion übernehmen.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnung. Darin zeigen:

Fig. 1 eine Seitenansicht eines erfindungsgemäßen Gerätes.

Fig. 2 eine Draufsicht auf das Gerät von Fig. 1,

Fig. 3 eine Seitenansicht einer abgewandelten Ausführungsform und

Fig. 4 eine Draufsicht auf die linke Hälfte des Gerätes von Fig. 3.

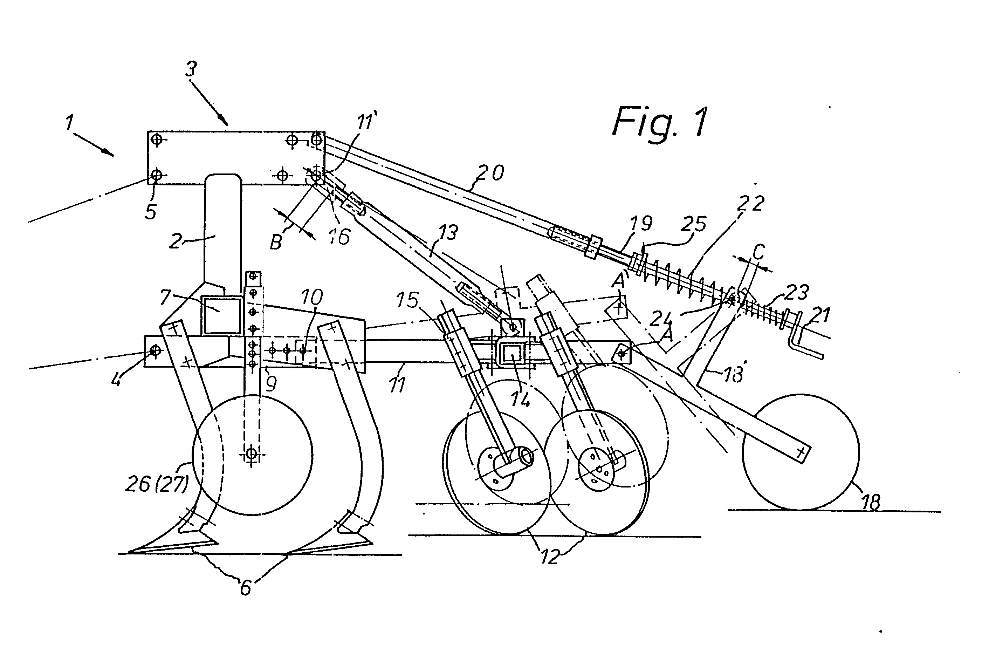

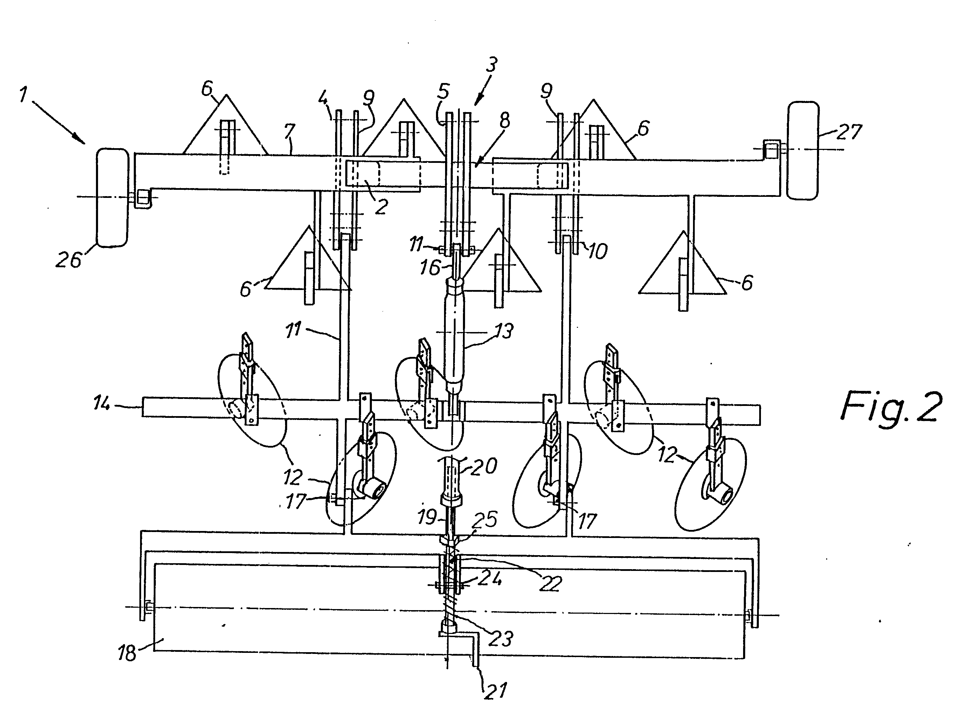

Das in Fig. 1 und 2 dargestellte Gerät hat einen Grubber 1, der an einem auf Stützräder 26, 27 laufenden Rahmen 7 Zinken 6 trägt. Nach oben erstreckt sich ein Ständer 2, welcher ein Plattenpaar 3 trägt, das parallel zu den Stützrädern 26, 27 angeordnet ist. Zum Anschluß an eine (nicht dargestellte) Zugmaschine sind Lenker-Verbindungen in Fig. 1 schematisch angedeutet. Am Rahmen 7 befindet sich vorne ein Anlenkpunkt 4 für einen Unterlenker und am Zapfenpaar 3 vorne ein Anlenkpunkt 5 für einen Oberlenker. In der Mitte des Rahmens 7 hat er eine Öffnung 8 für den Durchgang einer gegebenenfalls verlängerten (nicht gezeichneten) Gelenkwelle für ein (ebenfalls nicht gezeichnetes) zapfwellenangetriebenes Gerät.

In einer unten am Rahmen 7 befindlichen Lochschiene 9 sind hintere Anlenkpunkte 10 für einen Anbaurahmen 11 vorgesehen. Dieser hat einen Querbalken 14, welcher mit einem Spannschloß 13 am Anlenkpunkt 11' aufgehängt ist, der sich hinten unten am Plattenpaar 3 befindet. In einer Taschenverstellung 15 sind die Halterungen von Zustreichscheiben 12 höhenverstellbar angeordnet, die am Querbalken 14 beispielsweise mittels Spannschellen seitenverstellbar angebracht sind. Die Zustreichscheiben 12 sind schräggestellt, so daß sie in Fahrtrichtung gesehen ein offenes V bilden, das hinter der jeweils vorgeordneten Zinke 6 in solchem Abstand angeordnet ist, daß deren Bodenspur eingeebnet wird.

Ausweichbewegungen ermöglichen die Aufhängung des Spannschlosses über einen Schlitz bzw. ein Langloch 16, so daß bei auftretenden Bodenhindernissen der Anbaurahmen 11 nach oben gehen kann. Die Feineinstellung seiner Arbeitshöhe erfolgt mittels des Spannschlosses 13.

Am hinteren Ende des Anbaurahmens 11 sind Anlenkpunkte A vorgesehen, die beispielsweise als Zapfengelenke 17 ausgebildet sein können, um ein Nachlaufgerät gelenkig anzubringen. Als solches ist in Fig. 1 und 2 eine Krümelwalze 18 dargestellt, deren Stützrahmen 18' die Walze 18 beider seits drehbar lagert, und zwar ohne durchgehende Achse bzw. Welle. Der an den Zapfengelenken 17 angehängte Stützrahmen 18' ist mit einem Spindellager 24 verbunden, das auf einer Spindel 19 gleitbar angeordnet ist. Letztere wird mit einer Stange 20, die an einem oberen Anlenkpunkt 11" an dem Plattenpaar 3 hinten oben angelenkt ist. Mittels einer Kurbel 21 kann die Gesamtlänge von Spindel 19 und Stange 20 nach Bedarf eingestellt werden. Das Spindellager 24 ist zwischen zwei Druckfedern 22, 23 gespannt, von denen sich die vordere stärkere Druckfeder 22 an einer Stellscheibe 25 abstützt, während die hintere, schwächere Druckfeder 23 ihr Widerlager an der Kurbel 21 findet. Diese Abfederung des Spindellagers 24 dient der elastischen Abstützung des Nachlaufgerätes, hier also der Krümelwalze 18. Sobald Bodenhindernisse, z.B. Steine, auftreten, heben die rotierenden Zustreichscheiben 12 den Anbaurahmen 11 am hinteren Ende an. Die Zapfengelenke 17 kommen dann aus der normalen Anlenkpunkt-Position A in die gehobene Position A', wobei gleichzeitig der Stützrahmen 18' steiler gestellt wird. Das Spindellager 24 bewegt sich auf der Stellspindel 19 um das Bewegungsspiel C nach hinten gegen die schwächere Druckfeder 23. Das Langloch 16 des Spannschlosses 13 bewegt sich bei der Anhebung des Anbaurahmens um das Verschiebungsmaß nach vorn; falls erforderlich oder erwünscht, kann auch an dieser Stelle eine Abfederung vorgesehen sein.

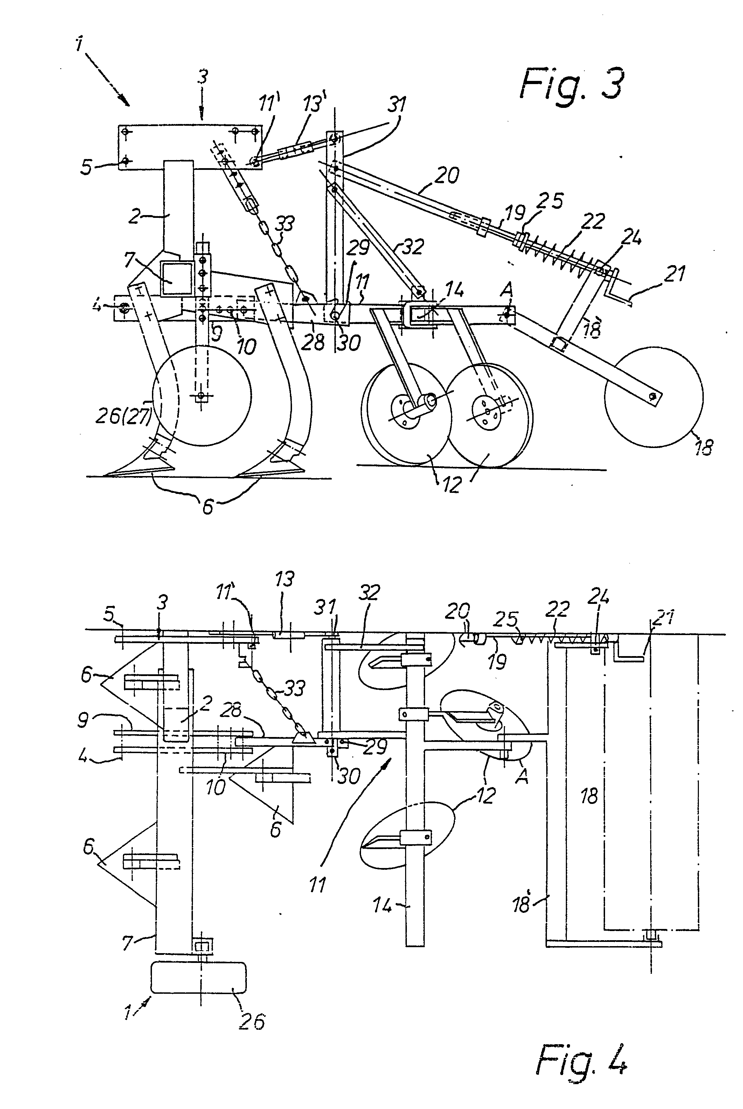

Wie das Ausführungsbeispiel gemäß Fig. 3 und 4 zeigt, kann die schwächere Druckfeder 23 auch entfallen, sofern nur das Spindellager 24 innerhalb des auftretenden Winkelbereichs genügend Bewegungsspiel hat. Bei dieser Ausführungsform ist an die Lochschienen 9 des Grubber-Rahmens 7 jeweils ein Unterlenker 28 angelenkt, der an seinen hinteren Enden mit einer Aufnahme oder Klaue 29 für ein Zapfengelenk 30 versehen ist, mit dem der Anbaurahmen 11 - Unterstecker-Absicherung - am Grubber 1 angelenkt ist. Der Anbaurahmen 11 trägt in diesem Falle einen Dreipunkt-Ständer 31, wobei zur Abstützung gegenüber dem Querbalken 14 einfache Lenker 32 genügen. Am oberen Ende ist der Dreipunkt-Ständer 31 mittels eines Spannschlosses 13' am Anlenkpunkt 11' des Plattenpaares 3 angebracht. Fangketten 33 zwischen dem Plattenpaar 3 und den Unterlenkern 28 begrenzen die Absenkung des Anbaurahmen-Vorderteils. Die Anordnung gewährleistet besonders große Freiheit in der Wahl der Bewegungsverhältnisse des Nachlaufgerätes gegenüber dem Grubber 1 als Vorgerät.

Sämtliche aus den Ansprüchen, der Beschreibung und der Zeichnung hervorgehenden Merkmale und Vorteile, einschließlich konstruktiver Einzelheiten und räumlicher Anordnungen, können sowohl für sich als auch in den verschiedensten Kombinationen erfindungswesentlich sein.

**Ansprüche**

1. Gerät zum Bodeneinebnen, insbesondere zum Zustreichen von Schlepperspuren, Grubberzinken-Rillen und dergleichen, mit einem Grubber, der über ein Dreipunkt-Gestänge an einem Schlepper anbringbar ist, sowie einen Rahmen aufweist, der auf höhenverstellbaren Stützrädern läuft und wenigstens zwei Reihen von Zinken haltert, welchen jeweils - bevorzugt paarweise - drehbar gelagerte Zustreichscheiben nachgeordnet sind, die im Winkel zur Fahrtrichtung stehen und denen wahlweise zusätzlich ein Nachlaufgerät, insbesondere eine Krümelwalzen-Anordnung folgt, dadurch gekennzeichnet, daß an dem Rahmen (7) oder an dem Dreipunkt-Gestänge ein Anbaurahmen (11) beweglich angelenkt ist, der die Zustreichscheiben (12) haltert.

2. Gerät nach Anspruch 1, dadurch gekennzeichnet, daß die Zustreichscheiben (12) an einem höhenbeweglichen Querbalken (14) des Anbaurahmens (11) seiten- und höhenverstellbar angebracht sind.

3. Gerät nach Anspruch 1 oder 2, dadurch gekennzeichnet, daß die Anlenkpunkte (10) des Anbaurahmens (11) an dem hinteren bzw. unteren Ende des Grubber-Rahmens (7) liegen.

4. Gerät nach einem der Ansprüche 1 bis 3, dadurch gekennzeichnet, daß der Anbaurahmen (11) gegenüber einem höher gelegenen Teil (3) des Grubbers (1) winkelbeweglich abgestützt ist.

5. Gerät nach Anspruch 4, dadurch gekennzeichnet, daß zur Abstützung ein Spannschloß (13) dient, das einerseits an oder nahe dem hinteren Ende des Anbaurahmens (11) an diesem und andererseits an dem höher gelegenen Teil (3) des Grubbers (1) angelenkt ist.

6. Gerät nach Anspruch 5, dadurch gekennzeichnet, daß an zumindest einem Anlenkpunkt (z.B. 11') eine Langloch-Befestigung (16) vorgesehen ist.

7. Gerät nach wenigstens einem der Ansprüche 1 bis 6, dadurch gekennzeichnet, daß an oder nahe dem hinteren Ende des Anbaurahmens (11) ein Nachlaufgerät (18) mit einem Stützrahmen (18') angelenkt ist, der seinerseits mit dem Grubber (1) winkelbeweglich verbunden ist.

8. Gerät nach Anspruch 7, dadurch gekennzeichnet, daß der Stützrahmen (18') ein Lager (24) für eine Gelenkspindel (19, 20) trägt.

9. Gerät nach Anspruch 8, dadurch gekennzeichnet, daß das Lager (24) zwischen Federn (22, 23) beweglich geführt ist, deren Spannung verstellbar ist.

10. Gerät nach Anspruch 9, dadurch gekennzeichnet, daß zur verstellbaren Abstützung einer Feder (22) auf der Spindel (19) eine Stellscheibe (25) vorhanden ist.

11. Gerät nach Anspruch 9 oder 10, dadurch gekennzeichnet, daß die in Fahrtrichtung vordere Feder (22) stärker ist als die hinter dem Lager (24) befindliche zweite Feder (23).

12. Gerät nach einem der Ansprüche 8 bis 11, dadurch gekennzeichnet, daß die Länge der Gelenkspindel (19, 20) veränderlich ist, insbesondere mittels einer Kurbel (21).

13. Gerät nach wenigstens einem der Ansprüche 1 bis 6, dadurch gekennzeichnet, daß der Anbaurahmen (11) über beiderseitige Zapfengelenke (30) mit dem Grubber-Rahmen (7) verbunden und an diesem über einen Dreipunkt-Ständer (31) abgestützt ist.

14. Gerät nach Anspruch 13, dadurch gekennzeichnet, daß der Grubber-Rahmen (7) Unterlenker (28) aufweist, die nach oben offene Aufnahmen (29) für die beispielsweise mittels Steckern sicherbaren Zapfengelenke (30) haben.

15. Gerät wenigstens nach Anspruch 14, dadurch gekennzeichnet, daß zur Begrenzung der Absenkung des Anbaurahmen-Vorderteiles zwischen dessen Anlenkung (10 bzw. 30) und dem höher gelegenen Teil (3) des Grubbers (1) Fangketten (33) vorgesehen sind.

16. Gerät nach einem der Ansprüche 5 bis 15, dadurch gekennzeichnet, daß der Dreipunkt-Ständer (31) durch das Spannschloß (13') mit dem höher gelegenen Teil (3) des Grubbers (1) verbunden ist.

17. Gerät wenigstens nach Anspruch 7 und 13, dadurch gekennzeichnet, daß der Anbaurahmen (11) mit dem Dreipunkt-Ständer (31) über einen Lenker (32) verbunden ist.

18. Gerät nach einem der Ansprüche 7 bis 17, dadurch gegennzeichnet, daß die Gelenkspindel (19, 20) des Nachlaufgerätes (18) an dem Dreipunkt-Ständer (31) angelenkt ist.

19. Gerät wenigstens nach den Ansprüchen 3 und 6, dadurch gekennzeichnet, daß die unteren Anlenkpunkte (10) zugleichUnterlenker-Anlenkpunkte für den Schubeinsatz bzw. Frontanbau sind und daß die oberen Anlenkpunkte (11') zugleich Oberlenker-Anlenkpunkte sind.

Fig. 1

0 280 048

0 280 048

Fig.2

0 280 048

Fig. 3

Fig. 4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-B-1 088 749 (MASCHINENFABRIK CRAMER)<br>* Spalte 2, Zeilen 33-54; Spalte 3, Zeilen 1-61; Spalte 4, Zeilen 1-25; Figuren 1,2 *<br>--- | 1,3,4,5 | A 01 B 49/02<br>A 01 B 35/18 |
| P,X | EP-A-0 211 967 (RABEWERK H. CLAUSING)<br>* Spalte 4, Zeilen 53-58; Spalte 5, Zeilen 1-8; Spalte 6, Zeilen 42-53; Figuren 1-5 *<br>--- | 1,4,5,6 ,7,13, 14,15 | |
| A | DE-A-2 546 080 (HOWARD MACHINERY LTD)<br>* Figur 1 *<br>--- | 7,8,9, 12,18 | |
| D,A | DE-U-7 736 543 (RABEWERK H. CLAUSING)<br>* Seite 5, Absatz 2; Seite 6, Absatz 1; Figuren 2,3,4 *<br>--- | 1-4 | |
| A | DE-A-1 757 310 (MASCHINENFABRIK SCHMOTZER GmbH)<br>--- | | |
| A | DE-A-2 055 566 (RABEWERK H. CLAUSING)<br>--- | | **RECHERCHIERTE SACHGEBIETE (Int. Cl.4)** |
| A | EP-A-0 153 765 (MASCHINENFABRIK RAU GmbH)<br>--- | | A 01 B |
| A | US-A-4 368 783 (HAKE)<br>* Figur 3 *<br>----- | 9 | |

Der vorliegende Recherchenbericht wurde für alle Patentansprüche erstellt

| Recherchenort | Abschlußdatum der Recherche | Prüfer |
|---|---|---|
| DEN HAAG | 26-05-1988 | VERDOODT S.J.M. |